Europäisches Patentamt

European Patent Office

Office européen des brevets

(11) Numéro de publication: **0 050 997**
**A1**

(12) DEMANDE DE BREVET EUROPEEN

(21) Numéro de dépôt: 81401401.5

(22) Date de dépôt: 09.09.81

(51) Int. Cl.³: **A 01 K 1/015**
**E 04 C 2/42**

(30) Priorité: 17.09.80 FR 8020024

(43) Date de publication de la demande:
05.05.82 Bulletin 82/18

(84) Etats contractants désignés:
AT BE CH DE GB IT LI LU NL SE

(71) Demandeur: COMPAGNIE D'ELECTROFORMAGE ET
PLASTIQUES
21 rue de l'Industrie
F-63302 Thiers Cedex Puy-de-Dôme(FR)

(72) Inventeur: Buissonniere, Paul Jean
Le Galop
F-63920 Peschadoires(FR)

(72) Inventeur: Fayet, Christian Fernand Paul
Chemin des Faures
F-63190 Orleat(FR)

(72) Inventeur: Laudre, Claude Lucien Jacques
119 avenue du Maréchal Foch
F-92210 Saint-Cloud(FR)

(74) Mandataire: Madeuf, Claude et al,
CABINET MADEUF 3, avenue Bugeaud
F-75116 Paris(FR)

(54) Elément de plancher, en particulier pour cases d'élevage d'animaux.

(57) L'élément de plancher est constitué sous la forme d'un caillebotis monobloc présentant sur son dessous une structure à alvéoles ouverts délimitée par une bordure périphérique (13) et des nervures (14, 15) des trous (12) débouchant dans certains au moins des alvéoles.

Fig.3

1 TITRE MODIFIÉ
voir page de garde

Elément de plancher, en particulier pour cases
d'élevage d'animaux, notamment de veaux.

La présente invention concerne un nouveal élément
de plancher destiné à être utilisé, notamment dans
des cases d'élevage d'animaux, en particulier des
veaux.

Les éléments de plancher actuellement connus sont
constitués par des lattes ou planches en bois qui
sont assemblées pour laisser entre elles un espace
suffisant pour permettre l'évacuation des déjections
des animaux par rinçage au jet.

Ce mode de réalisation présente des inconvénients.
En effet, le bois s'imprègne d'humidité et des déjections ne sont pas évacuées de sorte qu'il se constitue des foyers microbiens importants. C'est le cas,
tout particulièrement, au voisinage des parties du
plancher qui reposent sur des longerons et traverses
de soutien.

Pour remédier à cet inconvénient, on a proposé de
réaliser les planchers des cases d'élevage d'animaux
au moyen de dalles en béton. Cette disposition présente d'autres inconvénients. En effet, les dalles
sont lourdes à manipuler. Elles finissent par s'écailler et la nature rugueuse du béton retient également des salissures qui provoquent des développements
bactériens.

Différentes publications ont fait connaître des réalisations de caillebotis divers pouvant être fabriqués
par moulage en matière synthétique. Ainsi, la demande de brevet allemand 1 484 325 concerne une réalisation d'éléments comportant des longerons réunis par des traverses, les longerons délimitant entre eux des fentes allongées. Le brevet US 4 226 064 a fait connaître une réalisation d'un élément de plancher qui comporte un cadre muni de moyens d'assemblage permettant de le réunir à d'autres éléments semblables, un treillis étant formé dans chaque cadre. Le brevet suisse 545 585 a fait connaître un caillebotis qui comporte également des longerons et traverses, ces caillebotis étant destinés à être supporté à hauteur par un cadre périphérique. Le brevet FR 2 435 900 a également décrit une grille pour l'élevage d'animaux qui délimite des ouvertures de formes et dimensions progressivement croissantes selon que cette grille est destinée à supporter des animaux plus ou moins gros.

Jusqu'à présent, dans les réalisations connues, il n'a pas été tenu compte des facilités de nettoyage et moins encore de la recherche des dispositions permettant d'éviter que les éléments constitutifs d'un plancher soient souillés.

L'invention part de la constatation qu'il est important de réduire dans toute la mesure du possible la surface développée pouvant être souillée.

La présente invention remédie aux inconvénients ci-dessus en créant un nouvel élément de plancher qui peut être utilisé, non seulement dans l'application indiquée ci-dessus, mais encore à des fins quelconques, par exemple pour constituer un plancher intermédiaire

3

dans un véhicule de transport de certaines denrées, notamment des poissons, car les éléments de plancher de l'invention peuvent être facilement lavés, ils sèchent sans difficulté et ils sont complètement imputrescibles.

Conformément à l'invention, l'élément de plancher, en particulier pour cases d'élevage d'animaux, notamment des veaux, reposant sur des longerons, est constitué sous la forme d'un caillebotis monobloc présentant, sur son dessous, une structure à alvéoles ouverts et, sur son dessus, des pastilles saillantes entre certaines au moins desquelles sont prévus des trous débouchant dans certains au moins des alvéoles.

Diverses autres caractéristiques de l'invention ressortent, d'ailleurs, de la description détaillée qui suit.

Une forme de réalisation de l'invention est représentée, à titre d'exemple non limitatif, au dessin annexé.

La fig. 1 est une perspective d'une case pour élevage de veaux et animaux analogues.

La fig. 2 est une vue de dessus du caillebotis utilisable dans la case de la fig. 1.

La fig. 3 est une vue de dessous correspondant à la fig. 1.

La fig. 4 est une élévation latérale, partie en

4

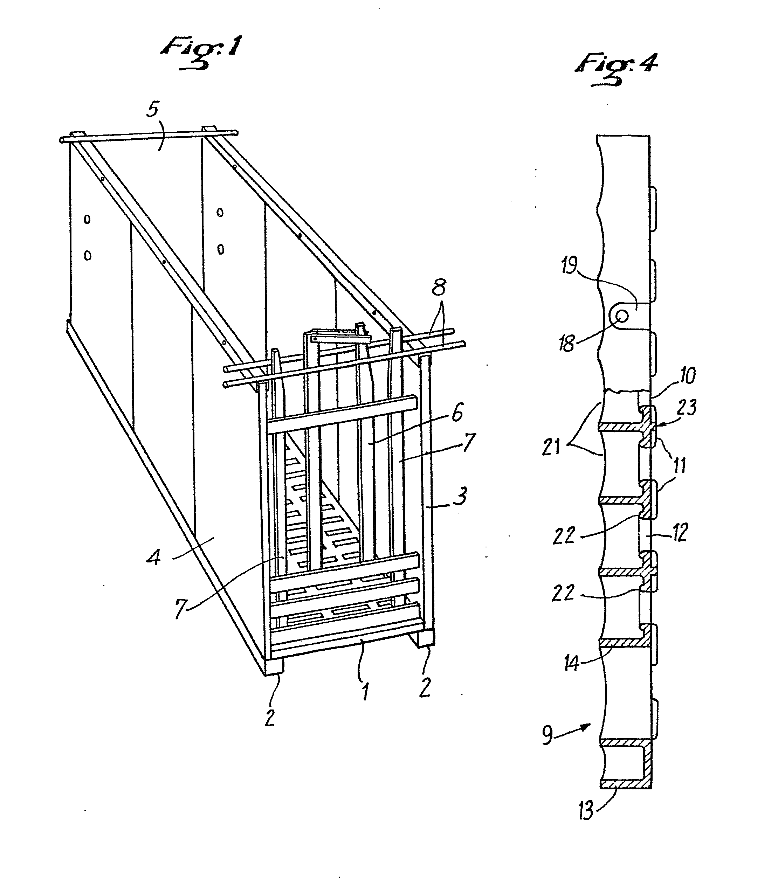

coupe, suivant la ligne IV-IV de la fig. 1.

La fig. 5 est une coupe partielle d'un détail de réalisation.

La case pour l'élevage de veaux, qui est représentée à la fig. 1, comporte un plancher 1 suppporté par des longerons 2 servant également au support des côtés latéraux 3, 4 ou bat-flanc. Les extrémités de la case sont fermées soit par le fond plein 5, soit par une trappe ou une porte 6. Le plus souvent on utilise une trappe comportant des montants 7 qui sont engagés dans des lumières du plancher et maintenus, à leur partie supérieure, entre des traverses 8 ce qui permet une ouverture et une fermeture faciles de la case pour l'entrée et la sortie de l'animal.

Selon l'invention, le plancher 1 est réalisé au moyen de caillebotis 9 fabriqués en matière synthétique, notamment en résine thermoplastique du genre polyéthylène ou analogue. Le plancher 1 comporte plusieurs caillebotis assemblés bout à bout ou simplement accolés les uns aux autres.

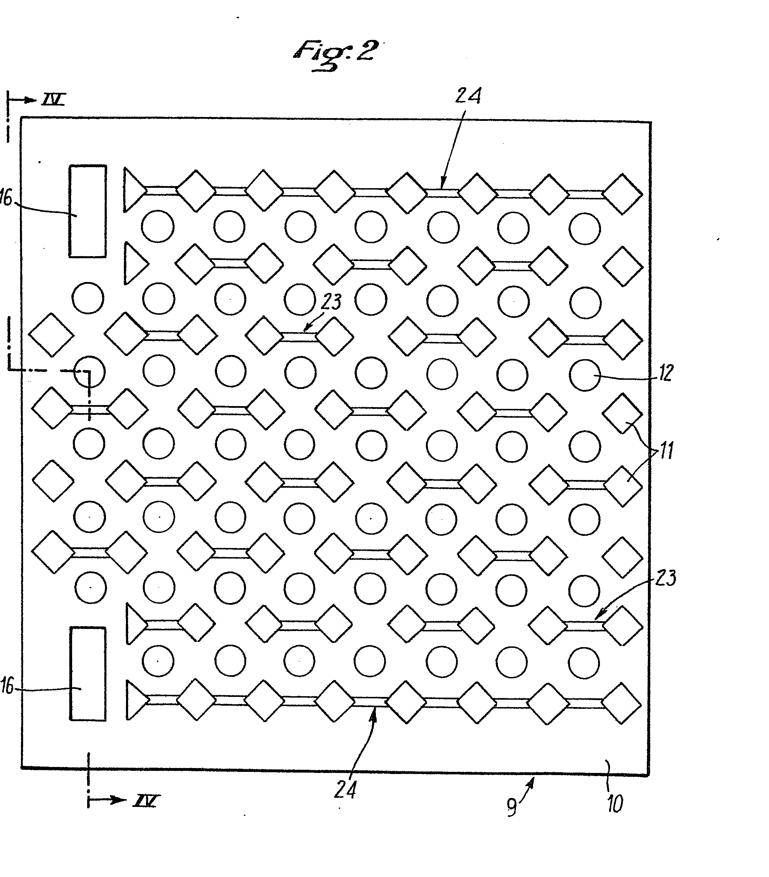

Comme l'illustrent les fig. 2 à 4, le caillebotis comporte un dessus 10 à partir duquel font saillie des pastilles 11 présentant, par exemple, la forme d'un carré à coins arrondis. Les pastilles 11 sont destinées à réduire les risques de glissement de l'animal sur le caillebotis de sorte qu'il peut se coucher et se lever facilement.

Des trous 12 sont également prévus, dans le de-

5

sus du caillebotis, entre les pastilles 11.

Pour conférer au caillebotis une réistance à la flexion appropriée, il est formé une bordure périphérique 13 et des nervures longitudinales 14 et transversales 15.

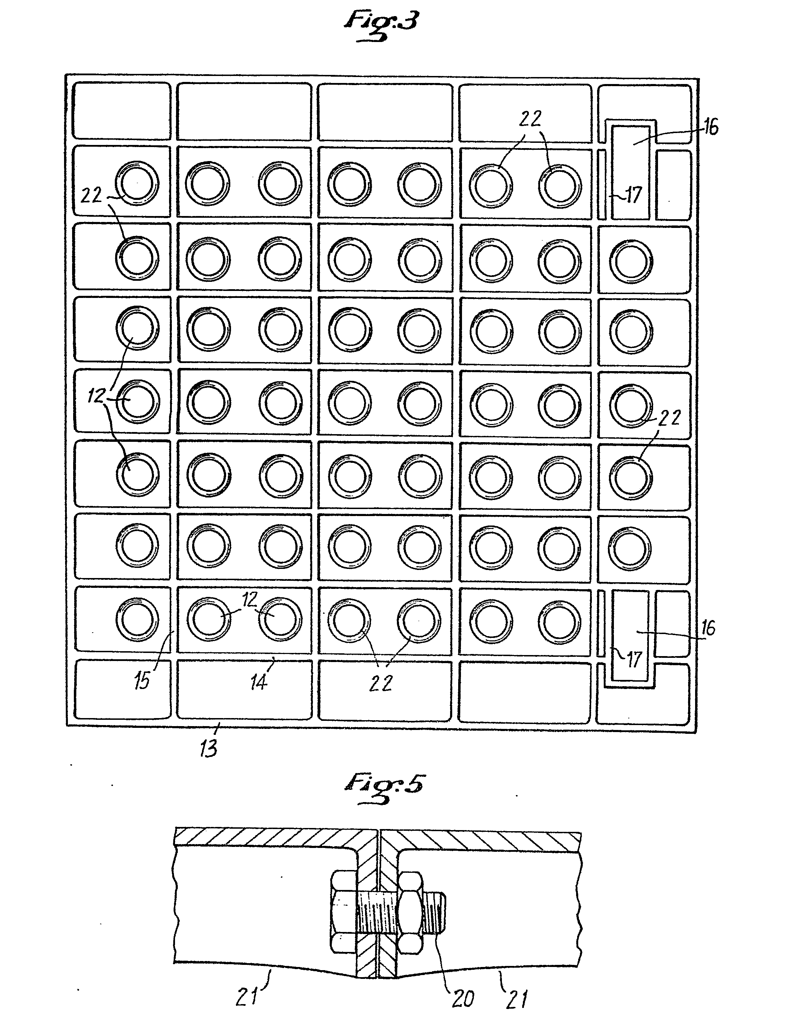

Comme l'illustre la fig. 3, les nervures longitudinales 14 et transversales 15 délimitent des alvéoles ouverts dans lesquels ouvrent les trous 12. Il est avantageux que les alvéoles voisins des côtés longitudinaux du caillebotis ne présentent pas de trou 12. En effet, le caillebotis est destiné à reposer sur les traverses 2, décrites dans ce qui précède, par des bords longitudinaux 13 et il importe que les longerons 2 soient protégés par le caillebotis des déjections de l'animal et des liquides de rinçage qui sont projetés de temps en temps pour assurer le nettoyage du caillebotis.

Outre ce qui précède, le caillebotis présente près de l'un de ses bords terminaux des boutonnières 16 traversant le dessus de part en part et autour desquelles sont formées des parois 17 de hauteur correspondant à celle des nervures 14, 15. La boutonnière 16 permet, ainsi, l'introduction des montants 7 de la trappe 6 décrite en référence à la fig. 1.

Des trous 18 sont également prévus dans les côtés terminaux et/ou latéraux du caillebotis, de préférence dans des parties renforcées 19, pour permettre le passage de boulons de fixation 20,

6

comme l'illustre la fig. 5, lorsqu'on désire assembler rigidement plusieurs caillebotis les uns à la suite des autres. La disposition des trous 18 permet ainsi de réunir plusieurs éléments alignés dans le même sens ou respectivement décalés de 90° les uns par rapport aux autres.

Bien que cela ne soit pas représenté, il est avantageux de prévoir des moyens permettant l'obturation de certains des trous 12 pour réduire la surface de passage de l'air dans certaines parties du plancher 1, notamment dans les parties qui correspondent à la poitrine et au cou de l'animal. On évite, ainsi, une ventilation excessive due au fait que la case est nécessairement disposée à une distance notable au-dessus du sol, par exemple de l'ordre de 30 à 40 cm, pour permettre un nettoyage facile et fréquent.

La forme des trous 12 peut varier entre la partie antérieure et la partie postérieure du caillebotis pour régler la ventilation à travers le caillebotis. Les trous 12 représentés ronds peuvent aussi présenter par exemple une forme oblongue. Il est possible, également, que la paroi des trous 12 ne soit pas verticale mais, par exemple, que cette paroi délimite les génératrices d'un tronc de cône. De même le dessous de la bordure périphérique 13 et le dessous des nervures 14 et 15 peuvent présenter des ondulations ou saillies 21, convexes ou concaves, pour faciliter l'écoulement de liquides lorsque l'élément de plancher est posé sur une surface plane. Ces saillies améliorent également la stabilité en particulier sur des surfaces rugueuses.

Les fig. 3 et 4 montrent que pour faciliter encore l'écoulement des liquides et empêcher que les nervures 14, 15 puissent être souillées, on forme à la périphérie des trous 12 · sur la face inférieure du dessus 10 des saillies 22 empêchant que les liquides puissent suivre la surface inférieure du dessus 10 par effet capillaire.

Les saillies 22 sont avantageusement en forme de gouttes d'eau mais peuvent présenter toute autre forme appropriée à la fonction recherchée.

La fig. 2 montre qu'il est avantageux que certaines au moins des pastilles 11 sont reliées par des barrettes 23 saillant d'une même mesure que lesdites pastilles. Il est possible que toutes les pastilles soient réunies ou bien, comme le montre le dessin, que les pastilles des bords latéraux soient réunies de manière continue par des barrettes formant un cordon 24 tandis que les pastilles des autres rangées sont réunies alternativement une sur deux.

Les barrettes et cordons ci-dessus sont destinés à faciliter encore à l'animal une bonne prise de sabot lorsqu'il désire se lever ou se coucher. En outre, la disposition alternée des barrettes permet d'éviter toute stagnation d'eau car l'écoulement peut s'effectuer par les différents trous

8

12 aussi bien dans le sens longitudinal que transversal si l'élément de plancher n'est pas parfaitement horizontal.

L'élément décrit ci-dessus étant fabriqué en matière plastique et de préférence en matière plastique moulée, il est avantageux de mettre en oeuvre un moule de fabrication qui permet de faire en sorte que toutes les surfaces de chaque élément à l'exception éventuellement du dessus soient lisses, voire polies. De cette manière, les souillures diverses ont peu de chances d'adhérer, ce qui facilite encore le nettoiement et les qualités d'hygiène que procure le plancher réalisé à partir des éléments décrits.

9

Revendications

1 - Elément de plancher, en particulier pour cases d'élevage d'animaux, notamment des veaux, ledit élément reposant sur des longerons, caractérisé en ce que chaque élément est constitué sous la forme d'un caillebotis monobloc présentant sur son dessous une structure à alvéoles ouverts et sur son dessus des pastilles saillantes entre certaines au moins desquelles sont prévus des trous débouchant dans certains au moins des alvéoles.

2 - Elément suivant la revendication 1, caractérisé en ce qu'au moins les alvéoles formés le long des côtés latéraux de chaque caillebotis ne présentent pas de trou.

3 - Elément suivant l'une des revendications 1 ou 2, caractérisé par des boutonnières, bordées par des parois saillant à l'intérieur des alvéoles, formés à partir du dessus du caillebotis près des côtés terminaux.

4 - Elément suivant l'une des revendications 1 à 3, caractérisé par des moyens d'assemblage de plusieurs caillebotis.

5 - Elément suivant l'une des revendications 1 à 4, caractérisé en ce que les moyens d'assemblage des caillebotis comportent des boulons ou analogues passés dans des trous prévus dans les bords desdits caillebotis.

6 - Elément suivant l'une des revendications 1 à 5, caractérisé par des moyens pour obturer certains des trous prévus dans le caillebotis.

7 - Elément suivant l'une des revendications 1 à 6, caractérisé en ce que chaque caillebotis présente des trous de forme variable.

8 - Elément suivant l'une des revendications 1 à 7, caractérisé en ce que la paroi délimitant certains au moins des trous d'un caillebotis s'étend suivant les génératrices d'un tronc de cône.

9 - Elément suivant l'une des revendications 1 à 8, caractérisé par des saillies formées sur le dessous de la bordure et des nervures.

10 - Elément suivant l'une des revendications 1 à 9, caractérisé en ce que des saillies sont formées à la périphérie des trous sur la face inférieure du dessus.

11 - Elément suivant l'une des revendications 1 à 10, caractérisé en ce que certaines au moins des pastilles sont reliées par des barrettes.

12 - Elément suivant l'une des revendications 1 à 11, caractérisé en ce que les barrettes s'étendent de façon alternée entre deux pastilles.

13 - Elément suivant l'une des revendications 1

11

à 12, caractérisé en ce que certains rangs de pastilles sont tous réunis par des barrettes formant un cordon.

14 - Elément suivant l'une des revendications 1 à 13, caractérisé en ce que l'ensemble de l'élément, à l'exception du dessus, présente une surface polie ou au moins lisse.

0050997

**Fig.1**

**Fig.4**

Fig. 2

Fig:3

Fig:5

**0050997**

Numéro de la demande

Office européen
des brevets

**RAPPORT DE RECHERCHE EUROPEENNE**

EP 81 40 1401

| | DOCUMENTS CONSIDERES COMME PERTINENTS | | |
|---|---|---|---|
| | | | CLASSEMENT DE LA DEMANDE (Int. Cl.³) |
| Catégorie | Citation du document avec indication, en cas de besoin, des parties pertinentes | Revendica-tion concernée | |
| XD | DE - A - 1 484 325 (HOLZ) <br> * Figures 1,2; pages 5-7 * <br> -- | 1,2,4 | A 01 K 1/015 <br> E 04 C 2/42 |
| XD | US - A - 4 226 064 (KRAAYENHOF) <br> * Figures 1-7, colonne 2, lignes 31-62 * <br> -- | 1,4,8,9 | |
| XD | CH - A - 545 585 (RUESCH) <br> * Figures 1,2,6; colonne 2, lignes 49-56; colonne 3, lignes 14-32 * <br> -- | 1,8 | DOMAINES TECHNIQUES RECHERCHES (Int. Cl.³) <br><br> A 01 K <br> E 04 C |
| D | FR - A - 2 435 900 (THYE-LOKENBERG) <br> * Figures 1,4-8; page 3, ligne 24 - page 5, ligne 37; page 7, lignes 6-40 * <br> -- | 1,7,8 | |
| | US - A - 2 281 822 (BILLS) <br> * En entier * <br> ---- | 10,11,13 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-11-1981 | VILBIG |

OEB Form 1503.1   06.78